# EUROPÄISCHE PATENTANMELDUNG

(11) **EP 2 239 232 A1**
(43) Veröffentlichungstag der Anmeldung: **13.10.2010**
(21) Anmeldenummer: 09179160.8
(22) Anmeldetag: 15.12.2009
(51) Int. Cl.: C02F 1/467, A23L 3/005

(54) **Vorrichtung zum Behandeln von Lebensmitteln**

(30) Priorität: 09.04.2009 DE 102009016821
(71) Anmelder: Simply Water GmbH, 93055 Regensburg (DE)
(72) Erfinder: Saefkow, Michael Dr., 74189 Weinberg (DE); Philipps, André, 93059 Regensburg (DE); Czech, Manuel, 93093 Donaustauf (DE)
(74) Vertreter: Bublak, Wolfgang

(57) **Zusammenfassung**

Die vorliegende Erfindung betrifft eine Vorrichtung (1) zum elektrischen Behandeln von Lebensmitteln (2), wenigstens umfassend einen Flüssigkeitsbehälter (3), welcher eine Reinigungsflüssigkeit (4) aufnehmen kann, eine Gleichstromversorgung (5), zwei Elektroden (9a;9b) und einen Flüssigkeitsablauf (6), über den die austretende Reinigungsflüssigkeit (4) direkt auf das zu behandelnde Lebensmittel (2) leitbar ist und/oder in einem Pufferbehälter zwischenlagerbar ist. Bevorzugt wird ein Diaphragmaverfahren eingesetzt.
Die Erfindung zeichnet sich dadurch aus, dass das zu behandelnde Lebensmittel (2) in direktem elektrischem Kontakt mit der Reinigungsflüssigkeit (4) steht. Die Reinigungsflüssigkeit (4) umfasst vorzugsweise Trinkwasser.
Durch die erfindungsgemäße Vorrichtung wird eine kontinuierliche, Ressourcen schonende und effektive Reinigung von Lebensmitteln ermöglicht. Die Mikroorganismen werden abtötet bzw. inaktiviert.

## Beschreibung

Die vorliegende Erfindung betrifft eine Vorrichtung zum elektrischen Behandeln von Lebensmitteln, wenigstens umfassend einen Flüssigkeitsbehälter, welcher eine Reinigungsflüssigkeit aufnehmen kann, eine Gleichstromversorgung, zwei Elektroden und einen Flüssigkeitsablauf, über den die austretende Reinigungsflüssigkeit direkt auf das zu behandelnde Lebensmittel leitbar ist und/oder in einem Pufferbehälter zwischenlagerbar ist.

Eine Behandlung von Lebensmitteln mit elektrolytisch behandelten oder erzeugten Flüssigkeiten ist im Stand der Technik bekannt. So beschreibt in beispielhafter Weise die DE 10 2007 017 502A1 ein elektrochemisch behandeltes Wasser, welches im beschränkten Umfang dazu verwendet werden kann, Lebensmittel zu behandeln.

Die im Stand der Technik verfügbaren Behandlungsmethoden von Lebensmitteln weisen eine Reihe von Nachteilen auf. Wird elektrolytisch behandeltes oder erzeugtes Wasser nach der Gewinnung über einen längeren Zeitraum aufbewahrt, so kann dieses Wasser seine physikalischen Eigenschaften verändern. Dies kann dazu führen, dass der reinigende bzw. desinfizierende Effekt des Wassers vermindert wird. Die durch Elektrolyse hergestellten Oxidantien haben oft einen schädigenden Effekt für Lebensmittel. Sie gelten als Biozide und dürfen in bestimmten Fällen nicht auf Lebensmittel oder Lebensmittel tierischen Ursprungs angewendet werden.

Diese Mittel enthalten immer noch einen diskreten Anteil an chemischen Wirkstoffen, die sie als Biozid deklarationspflichtig machen. Gegenstand dieser Erfindung ist den Anteil an chemische Wirkstoffen weiter zu reduzieren und den überaus größten Teil der Wirkung in Form einer physikalischen Wirkung per elektrostatischer Ladung des Wassers auf z.B. ein Lebensmittel zu applizieren. Dadurch sollen Keime abgetötet werden.

Hiervon ausgehend ist es die Aufgabe der vorliegenden Erfindung, eine Vorrichtung zur Reinigung von Lebensmitteln zu Verfügung zu stellen, welche eine verbesserte Reinigung ermöglicht.

Gelöst wird diese Aufgabe mit dem Merkmal des Patentanspruches 1. Vorteilhafter Aus- und Weiterbildungen, welche einzeln oder in Kombination miteinander eingesetzt werden können, sind Gegenstand der Unteransprüche.

Die erfindungsgemäße Vorrichtung baut auf den Merkmalen des Oberbegriffes dadurch auf, dass das zu behandelnde Lebensmittel in direktem elektrischen Kontakt mit der Reinigungsflüssigkeit steht.

Dadurch wird gegenüber dem Stand der Technik eine erhebliche Verbesserung erzielt. Über die Flüssigkeit, die aus dem Flüssigkeitsablauf austritt, und auf das Lebensmittel auftritt, wird eine elektrische Verbindung mit dem zu behandelnde Lebensmittel hergestellt. Dies führt dazu, dass eine elektrostatische Spannung an dem Lebensmittel angelegt wird. Dies führt zu einer erheblichen Verbesserung der Reinigung des Lebensmittels, da die Reinigung nun nicht auf dem Gehalt an chemischen Wirkstoffen wie z.B. der durch eine Elektrolyse entstandenen Oxidantien beruht, sondern auf der angelegten Spannung, die zu einem Abtöten von Mikroorganismen führt. Insofern ist die Wirkung physikalischer Natur. Die physikalische Keimreduktion auf Lebensmitteln erfolg somit mit Hilfe der Elektrostatik und dem angelegten elektrischen Strom. Die Keime auf den Lebensmitteln werden durch Einsatz der erfindungsgemäßen Vorrichtung zugleich abgespült und elektrisch abgetötet.

Dadurch, dass das zu behandelnde Lebensmittel in direktem elektrischen Kontakt mit der Reinigungsflüssigkeit und / oder dem Trinkwasser steht, wird es ermöglicht, dass eine simultane elektrostatische Behandlung des Wassers sowie Behandlung des Lebensmittels mit diesem Wasser ermöglicht wird. Dadurch kann ein beträchtlicher Zeiteinsparungseffekt erzielt werden. Darüber hinaus wird gewährleistet, dass eine galvanisch erzeugte Flüssigkeit bzw. Reinigungsflüssigkeit mit optimaler Qualität eingesetzt werden kann. Die Reinigungsflüssigkeit, welche sich in einem Behälter befindet, wird durch Anbringen einer Anode und eine Kathode einer elektrischen Spannung ausgesetzt. Die Dipole des Wassers werden in dem entstehenden elektrischen Feld ausgerichtet. Durch Influenz werden die negativen und positiven Ladungen getrennt und schließlich die negativen Ladungen (Elektronen) abgeführt. Ergebnis ist ein positiv geladenes, elektrostatisches Wasser. Bemerkenswert ist dabei, dass eine desinfizierende bzw. oxydierende Wirkung des behandelten Wassers bzw. der behandelten Reinigungsflüssigkeit auch dann zu beobachten ist, wenn die Gesamtkonzentration eventuell entstandener Oxidantien kleiner als 20 ppm, ja sogar kleiner als 2 ppm, oder sogar kleiner als 0,2 ppm ist. Somit ist, bei uneingeschränkt desinfizierender bzw. oxydierender Wirkung, die Reinigungsflüssigkeit lebensmitteltechnisch unbedenklich.

Da diese oxidierenden Verbindungen in dem galvanisch hergestellten Wasser nicht oder nur geringfügig auftreten, muss im Wasser ein anderer Wirkungsmechanismus vorliegen. Es wird angenommen, dass die Wirkung des wie oben beschriebenen behandelten Wassers auf der Anregung des Wassermoleküls selbst beruht. Die Wassermoleküle befinden sich in einem Clusterverband, sodass durch Durchführung einer schwachen galvanischen Influenz Wassermoleküle elektrisch entladen werden und die erzeugten Ladungsträger im Clusterverband durch ständigen Austausch stabilisiert sind (Grothus-Mechanismus). Das elektrisch entladene Wasser kann daher desinfizierend wirken, da es im Stande ist, Zellstrukturen zu denaturieren beziehungsweise die Elektronentransportmechanismen von Mirkoorganismen irreversibel zu stören. Dies ist einer der Gründe für die fehlende Resistenzbildung von Mikroorganismen gegenüber dem erfindungsgemäßen Wasser.

In einer bevorzugten Ausführungsform weist die Vorrichtung eine Trennmembran, auch Diaphragma genannt, in dem Flüssigkeitsbehälter auf. Die Trennmembran trennt Anodenraum von Kathodenraum. Die Reinigungsflüssigkeit wird zunächst zu den von der Kathode und dem Diaphragma, beziehungsweise der Membran, gebildeten kathodischen Raum geleitet. Ein Großteil des Katholyts, beispielsweise 15 bis 90 Prozent, wird in die anodische Kammer geführt, so dass er diese im Gegenstrom zur kathodischen Kammer durchfließt. Die angeregten Elektronen wandern durch die Membran in den kathodischen Raum; die elektronenarme Anolytfraktion kann gewonnen werden. Bei einer solchen Vorgehensweise werden die Wassercluster (zusammenhängende Wassermoleküle verursacht durch die Polarität des Wassermoleküldipols) elektrisch entladen. Es entstehen positiv geladene Wassercluster, die als Elektronenakzeptoren fungieren, der sogenannte Elektronenhunger. Dieser sättigt sich an einem Elektronendonator, zum Beispiel jeder Form von Einzellern. Eine galvanische Influenz mittels einer solchen Vorrichtung unterscheidet sich grundlegend von einer klassischen Elektrolyse, die zum Beispiel der Herstellung von Chlordioxid zugrunde liegt. Dabei wird ein vorliegender Elektrolyt lysiert, also aufgetrennt und in Radikale zerlegt. Auch die Elektrolyse, unter Zuhilfenahme einer Membran, die sogenannte Elektrodiaphragmalyse, welche zum Beispiel zur Herstellung von Natriumhypochlorid und anderen Oxidantien eingesetzt wird, ist ein solches zerlegendes Verfahren. Die Wirkung einer solchermaßen hergestellten Reinigungsflüssigkeit beruht auf den Gehalt an erzeugten Oxidantien in Form von chemischen Wirkstoffen. Im Unterschied zu diesem klassischen elektrolytischen Verfahren, welche als bewährte Methode bereits seit über 120 Jahren in unterschiedlichen Ausprägungen im Einsatz ist, wird bei der Elektrodiaphragmalyse des eingangs erwähnten Patentes DE 10 2007 017 502A1 das Wassermolekül nicht in seine Bausteine OH⁻ und H⁺ zerlegt, sondern bleibt pH-neutral (pH 7,0). Dieses bedeutet bereits einen bedeutenden Fortschritt der Entwicklung. Bei der vorliegenden Erfindung entsteht ebenfalls eine Reinigungsflüsigkeit mit pH 7, jedoch weitestgehend ohne chemische Spaltprodukte (Oxidantien), deren Wirksamkeit auf den Elektronenmangel und den daraus resultierenden Stromschlag beim Kontakt mit Mikroorganismen beruht. Dieses Elektronendefizit (positive Elektrostatische Ladung) befindet sich in einem Clusterverband, deren Wassermoleküle durch Anlegen einer bestimmten Stromstärke elektrisch geladen wurden (ähnlich wie bei einer Neonröhre, die durch Anregen der Elektronen des Edelgases zum Leuchten gebracht wird). Das Wassermolekül bleibt erhalten und tauscht die Ladungsträger innerhalb des Clusters ständig aus.

Die Reinigungsflüssigkeit kann beliebig mit einem zu behandelnden Lebensmittel in Kontakt gebracht werden, ohne dass die Qualität des Lebensmittels dadurch beeinträchtigt würde. Somit ermöglicht die vorliegende Erfindung eine schnelle, effektive und gründliche, kostensparende Reinigung von Lebensmitteln.

In einer bevorzugten Ausführungsform umfasst die Reinigungsflüssigkeit des Flüssigkeitsbehälters Natriumchlorid.

Die Influenz in einer galvanischen Zelle der Reinigungsflüssigkeit erfolgt bevorzugt als Diaphragmaverfahren, bei dem eine poröse, stromdurchlässige Membran (Diaphragma) den Anodenraum vom Katodenraum abtrennt. Durch Durchführung lediglich eines schwachen elektrischen Feldes und dadurch, dass die galvanische Zelle kontinuierlich betrieben wird, ist es möglich, dass nicht die Produktion von Natronlauge bzw. von Chlor-Derivaten im Vordergrund steht, sondern die Bildung von positiv elektrostatisch geladenem Wasser im Anodenraum. Bei Durchlauf einer Natriumchloridlösung durch die Anodenkammer bilden sich demzufolge keine oxydierenden Substanzen wie Chlor, Chlorit, Chlordioxid, Chlorat und andere Oxidationsmittel, lediglich Natriumhypochlorit kann in geringen Mengen entstehen. Bei der Untersuchung des desinfizierenden Effekts der galvanisch behandelten Reinigungsflüssigkeit konnte gezeigt werden, dass die desinfizierende Wirkung gleichwertig oder besser ist als bei durch Elektrolyse gewonnenen Desinfektionsmitteln, oder klassischen chemischen Desinfektionsmittel.
In einer bevorzugten Ausführungsform ist die Gesamtkonzentration der bei der galvanisch durch Influenz der Reinigungsflüssigkeit als Nebenprodukte entstandenen Oxidantien kleiner als 500 ppm, bevorzugt kleiner als 200 ppm, besonders bevorzugt kleiner als 20 ppm, ganz besonders bevorzugt kleiner als 2 ppm und insbesondere besonders bevorzugt kleiner 0,2 ppm. Diese geringen Konzentrationen an Oxidantien gewährleisten, dass die Reinigungsflüssigkeit keinen schädlichen Effekt auf die Lebensmittel ausführt.

Es hat sich als vorteilhaft erwiesen, wenn in einer bevorzugten Ausführungsform die Reinigung des Lebensmittels einen Zeitraum zwischen 1 Sekunde und 60 Minuten, bevorzugt zwischen 5 und 40 Minuten, besonders bevorzugt zwischen 10 und 20 Minuten benötigt. Durch solch kurze Zeiträume wird eine enorme Beschleunigung der Reinigungsmaßnahme erzielt. Es ist sogar möglich, die Reinigungsflüssigkeit über den Flüssigkeitsablauf auf Lebensmittel treffen zu lassen, die mittels eines Laufbandes kontinuierlich an der Vorrichtung vorbei bewegt werden. Dabei ist es von Vorteil, wenn die Vorrichtung auch einen Zulauf aufweist, über den kontinuierlich Flüssigkeit zu dosiert werden kann.

Vor besonderem Vorteil ist es, wenn es sich bei den zu behandelnden Lebensmitteln um Geflügel und/oder um Fisch und/oder um Schweinefleisch und/oder um Rind und/oder und/oder andere Lebensmittel tierischen Ursprungs und/oder um pflanzliche Lebensmittel, vorzugsweise Gemüse, Salat, Obst, Nüsse, Gewürze und/oder Getreide handelt. Solche Lebensmittel sind auf Grund ihres natürlichen Ursprungs oder Verarbeitungsprozesses besonders häufig mit hohen Kontaminationen belastet. Gleichzeitig erweisen sie sich häufig empfindlich gegenüber desinfizierenden Maßnahmen.

In einer weiteren bevorzugten Ausführungsform übt die Vorrichtung eine desinfizierende Wirkung auf Bakterien und/oder Bakteriensporen und/oder Pilzen und/oder Pilzsporen und/oder Viren und/oder Prionen und/oder einzelligen Algen und/oder Mischungen davon aus. Erfahrungsgemäß kann davon ausgegangen werden, dass die hergestellte Reinigungsflüssigkeit eine hinreichende desinfizierende Wirkung gegenüber sämtlichen genannten Mikroorganismen ausübt.

Von Vorteil ist es weiterhin, wenn die Elektrolyse mit einer Stromdichte von 0,5 bis 10 W / cm² durchführbar ist.

Von Vorteil ist es weiterhin, wenn in einer bevorzugten Ausführungsform eine Beaufschlagung der Lebensmittel mit der Reinigungsflüssigkeit dauernd und/oder intermittierend ausführbar ist.

Weiterhin hat es sich als vorteilhaft erwiesen, wenn die Vorrichtung wenigstens ein Mittel zur Erwärmung der Reinigungsflüssigkeit aufweist. In einer anderen bevorzugten Ausführungsform hat es sich als vorteilhaft erwiesen, wenn die Vorrichtung wenigstens ein Mittel zur Abkühlung der Reinigungsflüssigkeit aufweist, bis hin zur Verwendung als Eis. Dies kann je nach Beschaffenheit der zu behandelnden Lebensmittel ausgewählt werden.

Es hat sich als vorteilhaft erwiesen, wenn die Vorrichtung eine Halterung für das zu behandelnde Lebensmittel aufweist.

Von besonderem Vorteil ist es weiterhin, wenn beim Anbringen des Lebensmittels in die Halterung eine Beaufschlagung der Oberflächen des Lebensmittels mit der Reinigungsflüssigkeit automatisch auslösbar ist. Durch eine solche Kombination verschiedener Automatismen kann eine beträchtliche Zeit sowie Ressourcenersparnis erzielt werden.

Von besonderem Vorteil ist es, wenn die Vorrichtung zusätzlich Mittel zur Beaufschlagung des Lebensmittels mit Druckluft und/oder Heißluft und/oder UV-Licht und/oder einem Tensid aufweist. Dies ermöglicht eine umfassende, zuverlässige und besonders genaue Reinigung des Lebensmittels.

Von ganz besonderem Vorteil ist auch ein Verfahren zum elektrischen Behandeln von Lebensmitteln, welches folgende Schritte umfasst: Behandeln einer Reinigungsflüssigkeit in einer galvanischen Zelle, sowie gleichzeitiges Beaufschlagen der Oberflächen des Lebensmittels mit der Reinigungsflüssigkeit.

Weitere Vorteile und Ausgestaltungen der Erfindung werden im Folgenden anhand von zwei Ausführungsbeispielen veranschaulicht.

Darin zeigen schematisch:
Fig. 1 ein erstes Ausführungsbeispiel einer Vorrichtung zum elektrischen Behandeln von Lebensmitteln mit einem elektrisch geladenem Wasser; sowie
Fig. 2 ein zweites Ausführungsbeispiel einer Vorrichtung zur Reinigung von Lebensmitteln.

Bei der nachfolgenden Beschreibung zweier bevorzugter Ausführungsformen der vorliegenden Erfindung bezeichnen gleiche Bezugszeichen gleiche oder vergleichbare Komponenten.

Die hier erläuterten Ausführungsbeispiele dienen ausschließlich der Veranschaulichung der Erfindung und sind nicht im einschränkenden Sinne zu verstehen.

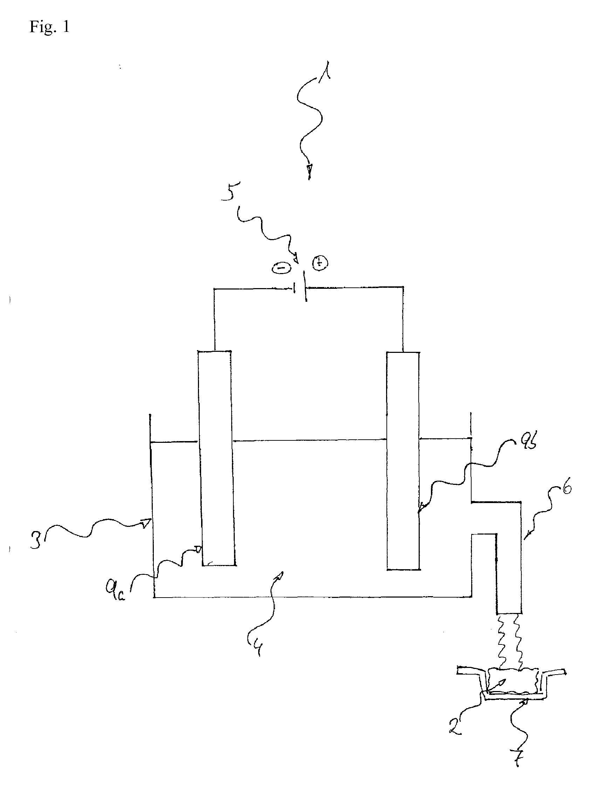

Fig. 1 zeigt in einer seitlichen Querschnittszeichnung eine Vorrichtung 1 zum elektrischen Behandeln von Lebensmitteln 2. Die Vorrichtung umfasst einen Flüssigkeitsbehälter 3, in dem eine Reinigungsflüssigkeit 4 und / oder Trinkwasser aufgenommen werden kann. In die Reinigungsflüssigkeit 4 werden eine Kathode 9a und eine Anode 9b eingesetzt, die über eine Gleichstromversorgung 5 miteinander elektrisch verbunden sind. Wird ein elektrischer Strom angelegt, so entsteht ein elektrischer Stromfluss und ein elektrisches Feld zwischen beiden Elektroden 9a und 9b. Dies bewirkt eine Ausrichtung der Dipole, der in der Reinigungsflüssigkeit enthaltenen Wasser-Moleküle, eine Auftrennung der Ladungen durch elektrische Influenz und schließlich den Abtransport der Elektronen, so dass eine positiv geladene Reinigungsflüssigkeit gewonnen wird. Über einen Flüssigkeitsablauf 6 steht das zu behandelnde Lebensmittel 2 in einem direkten Kontakt mit dem Flüssigkeitsbehälter 3, bzw. der Reinigungsflüssigkeit 4. Dies bewirkt eine doppelte Reinigungsfunktion. Zum einen wird das Lebensmittel durch die Eigenschaften des galvanisch behandelten Wassers gereinigt. Darüber hinaus bewirkt die elektrostatische Spannung eine Zerstörung anhaftender Mikroorganismen. Das Lebensmittel 2 wird durch eine Halterung 7 gehalten.

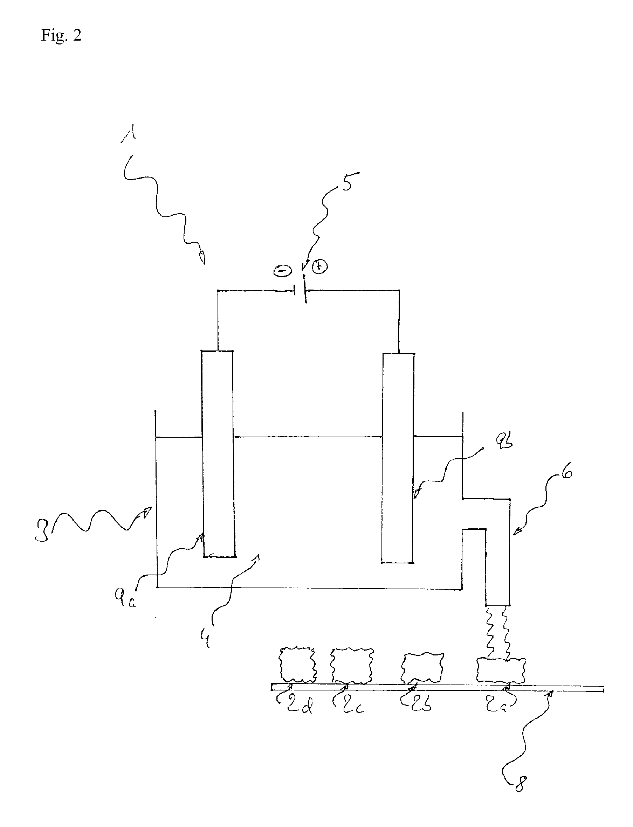

Fig. 2 zeigt eine zweite Ausführungsform der Vorrichtung 1 zur elektrischen Behandlung von Lebensmitteln 2. Die Vorrichtung 1 umfasst einen Flüssigkeitsbehälter 3, in welchem eine Reinigungsflüssigkeit 4 aufgenommen werden kann. Zwei Elektroden 9a und 9b stehen in elektrischem Kontakt mit der Reinigungsflüssigkeit 4. Die Elektroden 9a und 9b sind miteinander elektrisch über eine Gleichstromversorgung 5 verbunden. Wird über die Gleichstromversorgung 5 Strom angelegt, so beginnt eine Wanderung der elektrisch geladenen Teilchen innerhalb der Reinigungsflüssigkeit 4. Über einen Flüssigkeitsablauf 6 fließt Reinigungsflüssigkeit 3 auf ein zu behandelndes Lebensmittel 2a, 2b, 2c, 2d, welches auf einem Fließband 8 aufgebracht ist. Die Lebensmittel 2a, 2b, 2c, 2d werden in kontinuierlicher oder intermittierender Fortbewegungsweise an dem auftreffenden Strahl von Reinigungsflüssigkeit 4 vorbeigeführt. Dies ermöglicht eine besonders schnelle und effektive Reinigung von Lebensmitteln.

Durch die erfindungsgemäße Vorrichtung wird eine kontinuierliche, Ressourcen schonende und zugleich effektive Reinigung und Desinfektion eines Lebensmittels gewährleistet.

### Bezugszeichenliste

- 1.: Vorrichtung zum elektrischen Behandeln
- 2a, 2b, 2c, 2d: Lebensmittel
- 3: Flüssigkeitsbehälter
- 4: Reinigungsflüssigkeit
- 5: Gleichstromversorgung
- 6: Flüssigkeitsablauf
- 7: Halterung für das zu behandelnde Lebensmittel
- 8: Fließband
- 9a, 9b: Elektroden

## Patentansprüche

1. Vorrichtung (1) zum elektrischen Behandeln von Lebensmitteln (2), wenigstens umfassend einen Flüssigkeitsbehälter (3), welcher eine Reinigungsflüssigkeit (4) aufnehmen kann, wobei die Reinigungsflüssigkeit (4) vorzugsweise Trinkwasser umfasst, eine Gleichstromversorgung (5), zwei Elektroden (9a; 9b) und einen Flüssigkeitsablauf (6), über den die austretende Reinigungsflüssigkeit (4) direkt auf das zu behandelnde Lebensmittel (2) leitbar ist und/oder in einem Pufferbehälter zwischenlagerbar ist, **dadurch gekennzeichnet, dass** das zu behandelnde Lebensmittel (2) in direktem elektrischem Kontakt mit der Reinigungsflüssigkeit (4) und / oder dem Trinkwasser steht.

2. Vorrichtung (1) zum elektrischen Behandeln von Lebensmitteln nach Patentanspruch 1, **dadurch gekennzeichnet, dass** die Reinigungsflüssigkeit (4) in einer galvanischen Zelle durch Influenz in einem elektrischen Feld eine positive elektrostatische Ladung erfährt, die bei Kontakt mit Mikroorganismen zu einem Stromschlag führt, der diese Mikroorganismen abtötet bzw. inaktiviert, aber keine schädigende Wirkung auf Lebensmittel (2) hat.

3. Vorrichtung (1) zum elektrischen Behandeln von Lebensmittel (2) nach Patentanspruch 1 oder 2, **dadurch gekennzeichnet, dass** die Reinigungsflüssigkeit (4) des Flüssigkeitsbehälters (3) Natriumchlorid umfasst.

4. Vorrichtung (1) zum elektrischen Behandeln von Lebensmittel (2) nach einem der Patentansprüche 1 bis 3, **dadurch gekennzeichnet, dass** die Gesamtkonzentration der bei der galvanischen Erzeugung der Reinigungsflüssigkeit (4) entstandenen Oxidantien kleiner als 500 ppm, bevorzugt kleiner als 200 ppm, besonders bevorzugt kleiner als 20 ppm, ganz besonders bevorzugt kleiner als 2 ppm und insbesondere besonders bevorzugt kleiner 0,2 ppm ist.

5. Vorrichtung (1) zum elektrischen Behandeln von Lebensmittel (2) nach einem der vorhergehenden Patentansprüche, **dadurch gekennzeichnet, dass** die Reinigung des Lebensmittels (2) einen Zeitraum zwischen 1 Sekunde und 60 Minuten, bevorzugt zwischen 5 und 40 Minuten, und besonders bevorzugt zwischen 10 und 20 Minuten benötigt.

6. Vorrichtung (1) zum elektrischen Behandeln von Lebensmittel (2) nach einem der vorhergehenden Patentansprüche, **dadurch gekennzeichnet, dass** es sich bei den Lebensmittel (2) um Geflügel und / oder um Fisch und / oder um Schweinefleisch und / oder um Rind und / oder um andere Lebensmittel tierischen Ursprungs und/oder um pflanzliche Lebensmittel, vorzugsweise Gemüse und / oder Salat und / oder Obst und / oder Nüsse und / oder Gewürze und / oder Getreide handelt.

7. Vorrichtung (1) zum elektrischen Behandeln von Lebensmittel (2) nach einem der vorhergehenden Patentansprüche, **dadurch gekennzeichnet, dass** die Vorrichtung (1) eine desinfizierende Wirkung gegenüber Bakterien und / oder Bakteriensporen und / oder Pilzen und / oder Pilzsporen und / oder Viren und / oder Prionen und / oder einzelligen Algen und / oder Mischungen davon ausübt.

8. Vorrichtung (1) zum elektrischen Behandeln von Lebensmittel (2) nach einem der vorhergehenden Patentansprüche, **dadurch gekennzeichnet, dass** die Elektrolyse mit einer Stromdichte von 0,5 bis 10 W/cm² durchführbar ist.

9. Vorrichtung (1) zum elektrischen Behandeln von Lebensmittel (2) nach einem der vorhergehenden Patentansprüche, **dadurch gekennzeichnet, dass** eine Beaufschlagung der Lebensmittel (2) mit Reinigungsflüssigkeit (4) dauernd und / oder intermittierend ausführbar ist.

10. Vorrichtung (1) zum elektrischen Behandeln von Lebensmittel (2) nach einem der vorhergehenden Patentansprüche, **dadurch gekennzeichnet, dass** die Vorrichtung (1) wenigstens ein Mittel zur Erwärmung der Reinigungsflüssigkeit (4) aufweist.

11. Vorrichtung (1) zum elektrischen Behandeln von Lebensmittel (2) nach einem der vorhergehenden Patentansprüche, **dadurch gekennzeichnet, dass** die Vorrichtung (1) wenigstens ein Mittel zur Abkühlung der Reinigungsflüssigkeit (4) aufweist, bis hin zur Verwendung als Eis.

12. Vorrichtung (1) zum elektrischen Behandeln von Lebensmittel (2) nach einem der vorhergehenden Patentansprüche, **dadurch gekennzeichnet, dass** die Vorrichtung (1) eine Halterung (7) für das zu behandelnde Lebensmittel (2) aufweist.

13. Vorrichtung (1) zum elektrischen Behandeln von Lebensmittel (2) nach Patentanspruch 11, **dadurch gekennzeichnet, dass** beim Einbringen des Lebensmittels (2) in die Halterung (7) eine Beaufschlagung der Oberflächen des Lebensmittels (2) mit Reinigungsflüssigkeit (4) automatisch auslösbar ist.

14. Vorrichtung (1) zum elektrischen Behandeln von Lebensmittel (2) nach einem der vorhergehenden Patentansprüche, **dadurch gekennzeichnet, dass** die Vorrichtung (1) zusätzliche Mittel zur Beaufschlagung des Lebensmittels (2) mit Druckluft und / oder Heißluft und / oder UV-Licht und / oder einem Tensid aufweist.

15. Verfahren zum elektrischen Behandeln von Lebensmitteln (2) nach einem der vorhergehenden Patentansprüche, **gekennzeichnet durch** folgende Schritte:
Behandeln einer Reinigungsflüssigkeit (4) mittels galvanischer Influenz, gleichzeitiges Beaufschlagen der Oberflächen des Lebensmittels (2) mit der Reinigungsflüssigkeit (4).

## Geänderte Patentansprüche

### Geänderte Patentansprüche gemäss Regel 137(2) EPÜ.

**1.** Vorrichtung (1) zum elektrischen Behandeln von Lebensmitteln (2), wenigstens umfassend einen Flüssigkeitsbehälter (3), welcher eine Reinigungsflüssigkeit (4) aufnehmen kann, wobei die Reinigungsflüssigkeit (4) vorzugsweise Trinkwasser umfasst, eine Gleichstromversorgung (5), zwei Elektroden (9a; 9b) und einen Flüssigkeitsablauf (6), über den die austretende Reinigungsflüssigkeit (4) direkt auf das zu behandelnde Lebensmittel (2) leitbar ist und/oder in einem Pufferbehälter zwischenlagerbar ist, **dadurch gekennzeichnet, dass** das zu behandelnde Lebensmittel (2) in direktem elektrischem Kontakt mit der Reinigungsflüssigkeit (4) und / oder dem Trinkwasser steht, wobei eine Reinigung aufgrund einer angelegten Spannung erfolgt, die zu einem Abtöten von Mikroorganismen führt, und die Wirkung dieser Reinigung physikalischer Natur ist.

**2.** Vorrichtung (1) zum elektrischen Behandeln von Lebensmitteln nach Patentanspruch 1, **dadurch gekennzeichnet, dass** die Reinigungsflüssigkeit (4) in einer galvanischen Zelle durch Influenz in einem elektrischen Feld eine positive elektrostatische Ladung erfährt, die bei Kontakt mit Mikroorganismen zu einem Stromschlag führt, der diese Mikroorganismen abtötet bzw. inaktiviert, aber keine schädigende Wirkung auf Lebensmittel (2) hat.

**3.** Vorrichtung (1) zum elektrischen Behandeln von Lebensmittel (2) nach Patentanspruch 1 oder 2, **dadurch gekennzeichnet, dass** die Reinigungsflüssigkeit (4) des Flüssigkeitsbehälters (3) Natriumchlorid umfasst.

**4.** Vorrichtung (1) zum elektrischen Behandeln von Lebensmittel (2) nach einem der Patentansprüche 1 bis 3, **dadurch gekennzeichnet, dass** die Gesamtkonzentration der bei der galvanischen Erzeugung der Reinigungsflüssigkeit (4) entstandenen Oxidantien kleiner als 500 ppm, bevorzugt kleiner als 200 ppm, besonders bevorzugt kleiner als 20 ppm, ganz besonders bevorzugt kleiner als 2 ppm und insbesondere besonders bevorzugt kleiner 0,2 ppm ist.

**5.** Vorrichtung (1) zum elektrischen Behandeln von Lebensmittel (2) nach einem der vorhergehenden Patentansprüche, **dadurch gekennzeichnet, dass** die Reinigung des Lebensmittels (2) einen Zeitraum zwischen 1 Sekunde und 60 Minuten, bevorzugt zwischen 5 und 40 Minuten, und besonders bevorzugt zwischen 10 und 20 Minuten benötigt.

**6.** Vorrichtung (1) zum elektrischen Behandeln von Lebensmittel (2) nach einem der vorhergehenden Patentansprüche, **dadurch gekennzeichnet, dass** es sich bei den Lebensmittel (2) um Geflügel und / oder um Fisch und / oder um Schweinefleisch und / oder um Rind und / oder um andere Lebensmittel tierischen Ursprungs und/oder um pflanzliche Lebensmittel, vorzugsweise Gemüse und / oder Salat und / oder Obst und / oder Nüsse und / oder Gewürze und / oder Getreide handelt.

**7.** Vorrichtung (1) zum elektrischen Behandeln von Lebensmittel (2) nach einem der vorhergehenden Patentansprüche, **dadurch gekennzeichnet, dass** die Vorrichtung (1) eine desinfizierende Wirkung gegenüber Bakterien und / oder Bakteriensporen und / oder Pilzen und / oder Pilzsporen und / oder Viren und / oder Prionen und / oder einzelligen Algen und / oder Mischungen davon ausübt.

**8.** Vorrichtung (1) zum elektrischen Behandeln von Lebensmittel (2) nach einem der vorhergehenden Patentansprüche, **dadurch gekennzeichnet, dass** die Elektrolyse mit einer Stromdichte von 0,5 bis 10 W/cm² durchführbar ist.

**9.** Vorrichtung (1) zum elektrischen Behandeln von Lebensmittel (2) nach einem der vorhergehenden Patentansprüche, **dadurch gekennzeichnet, dass** eine Beaufschlagung der Lebensmittel (2) mit Reinigungsflüssigkeit (4) dauernd und / oder intermittierend ausführbar ist.

**10.** Vorrichtung (1) zum elektrischen Behandeln von Lebensmittel (2) nach einem der vorhergehenden Patentansprüche, **dadurch gekennzeichnet, dass** die Vorrichtung (1) wenigstens ein Mittel zur Erwärmung der Reinigungsflüssigkeit (4) aufweist.

**11.** Vorrichtung (1) zum elektrischen Behandeln von Lebensmittel (2) nach einem der vorhergehenden Patentansprüche, **dadurch gekennzeichnet, dass** die Vorrichtung (1) wenigstens ein Mittel zur Abkühlung der Reinigungsflüssigkeit (4) aufweist, bis hin zur Verwendung als Eis.

**12.** Vorrichtung (1) zum elektrischen Behandeln von Lebensmittel (2) nach einem der vorhergehenden Patentansprüche, **dadurch gekennzeichnet, dass** die Vorrichtung (1) eine Halterung (7) für das zu behandelnde Lebensmittel (2) aufweist.

**13.** Vorrichtung (1) zum elektrischen Behandeln von Lebensmittel (2) nach Patentanspruch 11, **dadurch gekennzeichnet, dass** beim Einbringen des Lebensmittels (2) in die Halterung (7) eine Beaufschlagung der Oberflächen des Lebensmittels (2) mit Reinigungsflüssigkeit (4) automatisch auslösbar ist.

**14.** Vorrichtung (1) zum elektrischen Behandeln von Lebensmittel (2) nach einem der vorhergehenden Patentansprüche, **dadurch gekennzeichnet, dass** die Vorrichtung (1) zusätzliche Mittel zur Beaufschlagung des Lebensmittels (2) mit Druckluft und / oder Heißluft und / oder UV-Licht und / oder einem Tensid aufweist.

**15.** Verfahren zum elektrischen Behandeln von Lebensmitteln (2) nach einem der vorhergehenden Patentansprüche, **gekennzeichnet durch** folgende Schritte:
Behandeln einer Reinigungsflüssigkeit (4) mittels galvanischer Influenz,
gleichzeitiges Beaufschlagen der Oberflächen des Lebensmittels (2) mit der Reinigungsflüssigkeit (4).
